# EUROPEAN PATENT APPLICATION

(11) **EP 3 722 079 A1**
(43) Date of publication of application: **14.10.2020**
(21) Application number: 19168507.2
(22) Date of filing: 10.04.2019
(51) Int. Cl.: B29C 64/277, B29C 64/386, B22F 3/105

(54) **METHOD FOR CALIBRATING AN IRRADIATION DEVICE OF AN APPARATUS FOR ADDITIVELY MANUFACTURING THREE-DIMENSIONAL OBJECTS**

(71) Applicant: Concept Laser GmbH, 96215 Lichtenfels (DE)
(72) Inventor: Zeulner, Fabian, 96215 Lichtenfels (DE); Dicken, Christian, 96050 Bamberg (DE); Kleinschmidt, Ann-Kathrin, 96047 Bamberg (DE)
(74) Representative: Hafner & Kohl PartmbB

(57) **Abstract**

Method for calibrating an irradiation device of an apparatus for additively manufacturing three-dimensional objects by means of successive layerwise selective irradiation and consolidation of layers of a build material which can be consolidated by means of at least two energy beams, wherein the at least two energy beams are guided via at least two irradiation units, wherein at least two calibration patterns (3 - 5, 14 - 18), particularly a pattern series (2, 21), are generated in a calibration specimen (1) comprising an at least partially overlapping, particularly complementary, first sub-pattern (6, 7, 19, 20) and second sub-pattern (6, 7, 19, 20), wherein the first sub-pattern (6, 7, 19, 20) is generated via the first irradiation unit and the second sub-pattern (6, 7, 19, 20) is generated via the second irradiation unit and calibration information is determined relating to a calibration status of the two irradiation units based on the at least two calibration patterns (3 - 5, 14 - 18).

## Description

The invention relates to a method for calibrating an irradiation device of an apparatus for additively manufacturing three-dimensional objects by means of successive layerwise selective irradiation and consolidation of layers of a build material which can be consolidated by means of at least two energy beams, wherein the at least two energy beams are guided via at least two irradiation units.

Apparatuses for additively manufacturing three-dimensional objects using energy beams, such as laser beams or electron beams are generally known from prior art. Usually each energy beam is guided via an irradiation unit, e.g. a scanner, across the build plane to selectively irradiate build material in each layer of the object. Further, it is known from prior art that at least one part of the build plane in which the build material is irradiated and thereby consolidated, can be irradiated via each of the energy beams in that the "writing regions" of the irradiation units, e.g. the regions in which both energy beams can be guided, overlap.

In the overlapping region the irradiation device has to be properly calibrated, e.g. to ensure that the coordinate systems of the at least two irradiation units are aligned to avoid errors, such as stitching errors or positioning errors of the at least two energy beams relative to each other. If the irradiation device is not properly calibrated, negative impacts on the object may result, as the relative position of regions irradiated via the first energy beam and regions irradiated via the second energy beam do not correspond to each other. In other words, build material could be irradiated in wrong positions or regions leading to defects in the object.

To avoid such negative impacts on the additive manufacturing process, it is known to generate calibration patterns in a calibration specimen, e.g. by writing / irradiating identical calibration patterns via the two irradiation units in different regions of the calibration specimen. Thus, it is possible to verify, whether both irradiation units generate the calibration pattern in the same position and with the same orientation. Typically, it is necessary that an operator uses a separate determination unit, e.g. an optical unit, such as a magnifying glass or a microscope, to identify defects or verify whether the calibration patterns are properly irradiated with the irradiation device. Hence, the analysis of the generated calibration patterns is cumbersome and time-consuming, as the calibration specimen has to be removed from the apparatus and analyzed via a separate determination unit. Further, every calibration pattern that has been generated on the calibration specimen has to be analyzed, e.g. under the microscope.

It is an object of the present invention to provide an improved method for calibrating an irradiation device, in particular allowing for a determination of the calibration status of the irradiation device without using a separate determination unit.

The object is inventively achieved by a method according to claim 1. Advantageous embodiments of the invention are subject to the dependent claims.

The method described herein is a method for calibrating an irradiation device of an additive manufacturing apparatus. The apparatus is adapted to additively manufacture three-dimensional objects, e.g. technical components, by means of successive selective layerwise consolidation of layers of a powdered build material ("build material") which can be consolidated by means of an energy source, e.g. an energy beam, in particular a laser beam or an electron beam. A respective build material can be a metal, ceramic or polymer powder. A respective energy beam can be a laser beam or an electron beam. A respective apparatus can be an apparatus in which an application of build material and a consolidation of build material is performed separately, such as a selective laser sintering apparatus, a selective laser melting apparatus or a selective electron beam melting apparatus, for instance.

The apparatus may comprise a number of functional units which are used during its operation. Exemplary functional units are a process chamber, an irradiation device, as described before, which is adapted to selectively irradiate a build material layer disposed in the process chamber with at least one energy beam, and a stream generating device which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

As described before, the invention relates to a method for calibrating the irradiation device of an additive manufacturing apparatus, e.g. to ensure that the at least two energy beams that are generated and guided via the at least two irradiation units of the irradiation device are guided along the correct beam paths, in particular to the same position in the build plane. The invention is based on the idea that at least two calibration patterns are generated, particularly a pattern series, e.g. comprising multiple calibration patterns. The at least two calibration patterns are generated in the calibration specimen, e.g. a metal plate, comprising an at least partially overlapping, particularly complementary, first sub-pattern and second sub-pattern. Hence, each of the calibration patterns comprises at least a first sub-pattern and at least a second sub-pattern.

The first sub-pattern is generated via the first irradiation unit and the second sub-pattern is generated via the second irradiation unit. Thus, the first energy beam that is guided via the first irradiation unit is used to selectively irradiate the calibration specimen to generate the first sub-pattern, whereas the second energy beam is guided via the second irradiation unit to generate the second sub-pattern in the calibration specimen. Based on the at least two calibration patterns, each comprising a first sub-pattern and a second sub-pattern, as described before, calibration information can be determined that relates to a calibration status of the two irradiation units.

In other words, the irradiation device is used to generate two different calibration patterns in or on the calibration specimen, wherein each of the calibration patterns comprises a first sub-pattern and a second sub-pattern. Based on the at least two calibration patterns it is possible to determine calibration information that relates to a calibration status of the irradiation device, i.e. of the two irradiation units. In other words, by analyzing the at least two calibration patterns, it is possible to verify, whether the irradiation device is properly calibrated or whether a calibration of the irradiation device is necessary. Particularly, the calibration patterns are generated in that an operator can determine the calibration status of the irradiation device via eye inspection in that the use of a separate determination unit, in particular a microscope, is not necessary.

According to a preferred embodiment of the inventive method, a reference calibration pattern can be determined based on the reflectivity and/or a contrast between the calibration pattern and a surrounding region by comparing at least two different calibration patterns, particularly via visual inspection. Thus, it is possible to identify (select) one of the at least two calibration patterns as reference calibration pattern based on a (structural) property of the calibration patterns, e.g. the reflectivity, particularly by comparing the calibration patterns or each calibration pattern with the surrounding region. The calibration information that relates to the calibration status of the irradiation device can be determined based on the determination of the reference calibration pattern, particularly via visual inspection.

For example, an operator may compare the reflectivity and/or the contrast of a calibration pattern and the surrounding region, i.e. positions in which a calibration pattern is generated via the irradiation device and positions in which the calibration specimen is not irradiated. Due to the irradiation of the calibration specimen, a property of the irradiated region, e.g. the reflectivity and/or the contrast of the irradiated region, is changed, wherein the irradiated regions, e.g. the calibration patterns, appear different in the (visual) inspection, in particular differently shaded. Hence, the individual calibration patterns can be compared with each other or with the region surrounding the calibration pattern, respectively, for determining a reference calibration pattern. For example, dependent on the material that is used and dependent on the type of calibration pattern that is irradiated into the calibration specimen, a maximum or minimum reflectivity and/or a maximum or minimum contrast can indicate the reference calibration pattern. Hence, it is not necessary to use a separate determination unit, as known from prior art, e.g. a microscope, for verifying whether the calibration patterns are properly aligned or whether differences in the relative position between two calibration patterns occur, but it is possible to determine the reference calibration pattern based on the reflectivity and/or a contrast of the at least two calibration patterns.

The reflectivity and/or the contrast of each calibration pattern is defined by the sub-patterns that are used to form the calibration pattern. Each calibration pattern, as described before, is composed of the first and the second sub-pattern that together form the calibration pattern. Of course, it is also possible to further introduce other components in each calibration pattern, e.g. process information. The change of reflectivity between the at least two calibration patterns is introduced via a change in the relative position of the two sub-patterns of each calibration pattern, as will be described in detail below. Therefore, it is possible for an operator or service personnel to directly visually identify the reference calibration pattern based on its reflectivity and/or the contrast. By identifying which of the calibration patterns is the reference calibration pattern, it is possible to directly derive the calibration status of the irradiation device.

It is particularly preferred that in at least one reference calibration pattern the sub-patterns are generated in a defined relative position without a displacement and that in at least one other calibration pattern the sub-patterns are displaced for a defined displacement, e.g. a defined relative distance. As described before, different a pattern series with at least two calibration patterns are generated, wherein each pattern series comprises one reference calibration pattern in which the sub-patterns are not displaced but show a defined relative position. The at least one other calibration pattern also comprises a first and a second sub-pattern, wherein the first sub-pattern and the second sub-pattern are displaced for a defined relative distance. In other words, the pattern series comprises calibration patterns with identical sub-pattern, wherein the relative position of the sub-patterns in each calibration pattern may be different.

For example, a pattern series with multiple calibration patterns can be generated comprising a reference calibration pattern that has a first and second sub-pattern positioned/generated in a defined relative position. The other calibration patterns are generated in that the two sub-patterns are displaced for defined relative distances, wherein the defined relative distances are different for the individual calibration patterns. In other words, the defined relative distance in the reference calibration pattern may be 0, whereas the other defined relative distances may increase and/or a decrease with respect to the reference calibration pattern, as will be described below.

Due to the changing relative distance between the two sub-patterns the reflectivity and/or the contrast between two calibration patterns or between the individual calibration patterns and the surrounding region changes accordingly. Thus, each calibration pattern stands for or represents a defined displacement of the first sub-pattern relative to the second sub-pattern or vice versa. As the first sub-pattern is generated via the first irradiation unit and the second sub-pattern is generated via the second irradiation unit, the positions of the first sub-pattern and the second sub-pattern in each calibration pattern are directly linked with the relative position of the energy beams being guided via the first and the second irradiation unit. Thus, with a properly calibrated irradiation device, the calibration pattern without a displacement between the two sub-patterns is identified as reference calibration pattern.

Therefore, if both irradiation units are displaced or show a spatial error in guiding the respective energy beams, the sub-patterns will be displaced accordingly.

Thus, the "intended" reference calibration pattern, in which the sub-patterns should not be displaced relative to each other, will show a displacement and another calibration pattern that should show a defined displacement will have sub-patterns that are not displaced relative to each other. Hence, the operator or service personnel may identify the reference calibration pattern via the reflectivity and/or the contrast or the color or the like of the calibration pattern, e.g. searching for a minimum or maximum value, wherein the corresponding calibration pattern that shows the minimum or maximum value is deemed as reference calibration pattern. Subsequently, it is possible to identify to which displacement this particular calibration pattern is linked or with which defined displacement the sub-patterns in the corresponding calibration pattern has been generated (should have been generated). Hence, it can directly be identified whether the intended displacement was met or whether a displacement error is present and a calibration of the at least two irradiation units is necessary.

It is particularly preferred that for calibrating the irradiation device multiple calibration patterns are generated in a pattern series, wherein the displacement of the sub-patterns increases and/or decreases between the individual calibration patterns, particularly relative to the reference calibration pattern. As described before, a reference calibration pattern may be defined in which the sub-patterns are not displaced relative to each other, if the irradiation device is already properly calibrated. Starting from or relative to the reference calibration pattern multiple other calibration patterns can be defined with increasing and/or decreasing displacement.

For example, calibration patterns with a displacement of 0.1, 0.2, 0.3 a.u., and - 0.1, -0.2, -0.3. a.u. may be defined. The term "a.u." may represent any arbitrary unit, such as µm. After the pattern series has been irradiated into/on the calibration specimen, the operator or service personnel may determine the reference calibration pattern, particularly visually via eye inspection, wherein, inter alia, the calibration pattern with maximum or minimum reflectivity or contrast is chosen as reference calibration pattern, as this is the calibration pattern in which the sub-patterns show no displacement or maximum displacement, for instance. The operator may therefore, choose the calibration pattern as reference calibration pattern that appears darkest or brightest.

For example, if the irradiation units are displaced by 0.2 a.u., the calibration pattern showing a displacement of -0.2 a.u. shows the maximum/minimum value (reflectivity or contrast) and is the reference calibration pattern in the corresponding pattern series. Therefore, service personnel can directly derive that the irradiation device is not properly calibrated, but an adjustment to the irradiation device is necessary, wherein due to the identified reference calibration pattern the occurring displacement can directly be derived as 0.2 a.u..

According to another embodiment of the inventive method, each calibration pattern may comprise complementary sub-patterns that complement each other, particularly to a completely irradiated reference calibration pattern (without displacement). In other words, each calibration pattern is composed of the first sub-pattern and the second sub-pattern or contains a first sub-pattern and a second sub-pattern that complement each other. As the first sub-pattern and the second sub-pattern are arranged without displacement in the (intended) reference calibration pattern, the first sub-pattern and the second sub-pattern will lead to a completely irradiated or a maximum non-irradiated area (dependent on the arrangement of the sub-patterns) in the reference calibration pattern. In all other calibration patterns, a displacement between the first and the second sub-pattern or the positions of the first and the second sub-pattern is introduced leading to a shift between the positions of the first sub-pattern and the second sub-pattern. Therefore, the reflectivity or the contrast of the areas of the different calibration patterns will vary.

According to another preferred embodiment of the inventive method, each sub-pattern comprises multiple calibration elements arranged in a defined, particularly symmetric and self-repeating geometry. For example, each calibration pattern may comprise a defined number of stripes spaced apart in a defined distance from each other, wherein particularly the first sub-pattern comprises the same structure as the second sub-pattern, wherein dependent on the arrangement of the structures, the sub-patterns complement each other.

Thus, if the first sub-pattern and the second sub-pattern are irradiated without a displacement to form the reference calibration pattern, the whole area of the reference calibration pattern is irradiated. If a displacement between the first sub-pattern and the second sub-pattern is introduced, the individual structures (e.g. stripes or lines) of the first sub-pattern and the second sub-pattern partially overlap. Of course, it is also possible to generate the reference calibration pattern in that the first sub-pattern and the second sub-pattern perfectly match, wherein a displacement of the first sub-pattern and the second sub-pattern in the other calibration patterns leads to a shift of both sub-patterns and therefore, of a decrease/increase of the reflectivity/contrast. Thus, it is possible that an operator or service personnel may directly visually identify whether a displacement occurs in the individual calibration patterns and thereby, identify which of the calibration patterns is the reference calibration pattern. As each calibration pattern is linked to a defined displacement, it is possible to directly identify the displacement of the irradiation units.

Basically, it is not of importance which calibration elements are used in the individual sub-patterns, but it is preferred that the calibration elements of the sub-patterns are lines or doted patterns or rectangles, particularly squares. As described before, it is particularly advantageous to use sub-patterns with calibration elements that complement each other, e.g. complementarity lines or stripes.

It is particularly preferred that the sub-patterns comprise at least two calibration elements, wherein the gap between two calibration elements of one sub-pattern matches the width of the calibration elements of the other sub-pattern. For example, if lines or stripes are used as calibration elements, the first sub-pattern may comprise at least two lines or stripes that are spaced from each other via a gap. The gap matches the width of the calibration elements of the second sub-pattern, e.g. lines or stripes. In other words, both, the first and the second sub-pattern comprise at least two or more calibration elements (stripes or lines or rectangles) that are spaced away from each other by a gap that also comprises the width of the calibration elements. Therefore, if both sub-patterns are perfectly aligned, the gaps of one sub-pattern are filled with the calibration elements of the other sub-pattern and vice versa, wherein the gap with equals the width of the calibration elements. Of course, the example with lines or stripes or squares is arbitrarily transferable on all other calibration elements, e.g. squares, dotted patterns or the like.

The inventive method may further be improved in that at least two identical pattern series are generated in at least two different regions of the calibration specimen, particularly one pattern series in each edge region and/or in the center of the calibration specimen, wherein the reference calibration pattern may be determined in each pattern series or individually for each of the pattern series, respectively. As described before, each pattern series may involve different calibration patterns, wherein the reference calibration pattern may be determined based on the reflectivity and/or the contrast or any other arbitrary (optical or structural) parameter indicating a relative displacement between the two sub-patterns of each calibration pattern. By generating the same pattern series in different regions of the calibration specimen, it is possible that a displacement of the irradiation units can be identified for each region separately. Thus, it can be identified, whether a displacement of the irradiation units occurs uniformly in each region, e.g. the edge regions, and/or the center, of the calibration specimen or whether displacements vary across the calibration specimen or between the different regions of the calibration specimen.

It is particularly preferred that based on the determined reference calibration patterns of the at least two identical pattern series a rotational error and/or a distortion can be determined. As described before, the pattern series may be generated in different positions and/or under different orientations on the calibration specimen. By determining the reference calibration patterns in those pattern series, it is possible to identify the individual displacements of the two irradiation units in the regions the at least two identical pattern series are assigned to. For example, the identical pattern series is generated along all four edges of a calibration specimen, e.g. a metal plate, wherein a first pattern series is generated along a first edge, a second pattern series is generated along a second edge, a third pattern series is generated along a third edge and a fourth pattern series is generated along a fourth edge of the calibration specimen.

In other words, the different displacements of the individual calibration patterns of each pattern series may increase (or decrease) from the first to the last calibration pattern in the pattern series, e.g. oriented clockwise or counterclockwise on the calibration specimen. By determining the reference calibration pattern in each pattern series, the displacement of both irradiation units relative to each other can be determined for each edge or for each region of the calibration specimen allowing to verify whether a rotational error and/or a distortion is present.

Further, it is possible that at least two different pattern series are generated in the same region or in two adjacent regions, wherein the two different pattern series comprise calibration elements differing in at least one parameter, particularly the gap size and the width of the calibration elements. This embodiment allows for simplifying the determination process or making the determination process more comfortable, wherein pattern series with different parameters can be generated in various regions of the calibration specimen. For example, it is possible to generate three different pattern series in each region of the calibration specimen, wherein due to the different parameters, particularly different parameters of the calibration elements, such as width of the calibration elements or the gap sizes between the calibration elements, it is possible that the individual pattern series are more or less easy to be determined via an operator or service personnel. Hence, the operator may choose the pattern series which shows the reference calibration pattern best.

According to another preferred embodiment, at least one calibration pattern can be generated with two-dimensional sub-patterns, particularly checkered sub-patterns. Hence, each sub-pattern represents a checkerboard structure, wherein the individual calibration elements are squares or rectangles and the corresponding gaps are also squares or rectangles of the same dimensions. In other words, the calibration elements may be deemed as the black/white portions of the checkerboard, wherein the corresponding gaps may correspondingly be deemed as the white/black portions of the checkerboard. Hence, particularly both sub-patterns complement each other, wherein, for example the calibration elements are the black portions of the checkerboard and the sub-patterns in the reference calibration pattern are arranged in that the entire calibration pattern is an irradiated area. Thus, displacements in both x- and y-direction can be directly identified from each calibration pattern, as the displacement can be determined via the reflectivity and/or the contrast, as described before.

Particularly, a two-dimensional pattern series may be generated, wherein each calibration pattern comprises two-dimensional sub-patterns, wherein a displacement in the first direction of sub-patterns increases and/or decreases between two calibration patterns arranged adjacently in a first direction, particularly an x-direction and a displacement in a second direction of sub-patterns increases and/or decreases between two calibration patterns arranged adjacently in a second direction, particularly a y-direction. Thus, it is possible to generate a two-dimensional pattern series on the calibration specimen, e.g. introducing displacements starting from an (intended) reference calibration pattern in two dimensions, particularly in x- and y-direction.

According to another preferred embodiment, information, particularly visually recognizable information, can be generated on the calibration specimen, particularly adjacent to at least one calibration pattern, relating to at least one parameter of the calibration pattern, in particular a displacement of the sub-patterns and/or a parameter of the calibration elements, particularly the width of the calibration elements, and/or at least one suggestion for a control of at least one parameter of the apparatus. According to this embodiment, it is possible to add information next to the individual calibration patterns. For example, it is possible to directly irradiate information on to the calibration specimen next to the calibration pattern the information corresponds to.

For example, if a calibration pattern is generated with a defined displacement, e.g. 0.2 a.u., a corresponding, particularly visually recognizable, information may indicate that the sub-patterns of the corresponding calibration pattern are displaced via 0.2 a.u. If this calibration pattern is deemed as reference calibration pattern, it is also possible to introduce a suggestion on how to compensate the displacement. Thus, -0.2 a.u. may indicate the necessary change to the corresponding parameter to compensate the displacement between the two irradiation units. Of course, any other arbitrary value that allows for compensating and identify displacements based on the corresponding calibration pattern may be used. It is also possible to give information on the particular calibration pattern, e.g. which calibration elements are used or the width of the calibration elements or the like.

The generated calibration information may be or may comprise
- a position information and/or
- a relative position between the first and the second sub-pattern of the same calibration pattern and/or
- an orientation information and/or
- a relative position between at least two sub-patterns and/or
- a reflectivity of the calibration pattern, particularly a grey value, in particular a brightness or darkness and/or
- a contrast between the calibration pattern and a surrounding region.

Thus, as described before, the operator or service personnel particularly may visually inspect the generated calibration specimen, in particular the individual calibration patterns generated on the calibration specimen, wherein based on the determined reference calibration pattern it is possible to derive information relating to a position information of the sub-patterns, in particular a position difference or a deviation from a nominal position of the individual sub-patterns. It is also possible to derive whether defined relative positions between the first and the second sub-pattern of the same calibration patterns are met or whether an unintended displacement occurred during the generation of the corresponding calibration pattern.

As described before, it is also possible to derive orientation information, e.g. whether a rotational error or a distortion of the scanning fields of both irradiation units occur. Dependent on a relative position between the at least two sub-patterns of each calibration pattern it is possible to derive whether the irradiation units are properly aligned or whether an unintended displacement between both systems occurs. The occurring displacement between the two sub-patterns can be identified via a reflectivity of the individual calibration pattern. For example, if the individual sub-patterns of a properly aligned (dependent on the material and the arrangement of the sub-pattern) a maximum or minimum value of the reflectivity can be determined.

Particularly a grey value can be determined, for example a brightness or a darkness or the contrast between the calibration pattern and the surrounding region. For example, it is possible that the operator or service personnel searches for the brightest or darkest calibration pattern which can be deemed as reference calibration pattern, thereby indicating the calibration pattern in which the sub-patterns are arranged without a displacement. Dependent on whether this calibration pattern was the calibration pattern without the displacement or whether a displacement error between both irradiation units caused that particular calibration pattern to become the reference calibration pattern, a calibration of the irradiation device can be deemed necessary.

Besides, the invention relates to an apparatus for additively manufacturing three-dimensional objects by means of successive layerwise selective irradiation and consolidation of layers of a build material which can be consolidated by means of at least two energy beams guided via two irradiation units, wherein the apparatus is adapted to perform the inventive method. Self-evidently, all details, features and advantages described with respect to the inventive method are fully transferable to the inventive apparatus.

Of course, it is also possible that the apparatus comprises a determination unit that is adapted to determine the calibration information, in particular automatically, e.g. by determining the reflectivity or the contrast of the individual calibration patterns and comparing the reflectivity or the contrast of the calibration patterns. Thus, it is possible to use a determination unit to identify the reference calibration pattern and thereby, generate calibration information that indicates whether the irradiation device of the apparatus is properly calibrated or whether a calibration is necessary. It is also possible to directly generate data that allows for performing the calibration, e.g. data indicating which parameter has to be changed to compensate a present displacement.

Exemplary embodiments of the invention are described with reference to the Fig. The Fig. are schematic diagrams, wherein
- Fig. 1: shows an exemplary embodiment of a pattern series;
- Fig. 2: shows an exemplary embodiment of the pattern series of Fig. 1 irradiated on a calibration specimen;
- Fig. 3: shows a first exemplary embodiment of a calibration specimen in top view; and
- Fig. 4: shows a second exemplary embodiment of a calibration specimen in top view.

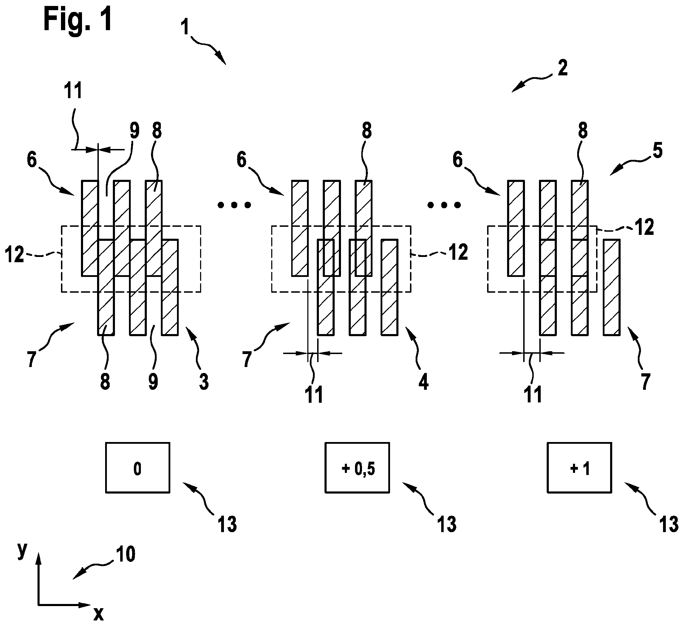

The inventive method will be described according to exemplary embodiments with reference to the Fig., wherein Fig. 1 shows a first exemplary embodiment of an (intended) pattern series that would be irradiated in a calibration specimen 1, if the corresponding irradiation device of an apparatus for additively manufacturing three-dimensional objects (not shown) is properly calibrated. The corresponding irradiation device comprises at least two irradiation units that are adapted to (generate and) guide two energy beams, e.g. laser beams, across the build plane in which for purposes of performing the calibration method, the calibration specimen 1 is arranged.

As can be derived from Fig. 1, the pattern series 2 comprises (exemplarily) three calibration patterns 3, 4, 5, wherein each calibration pattern 3-5 comprises a first sub-pattern 6 and a second sub-pattern 7. In the embodiments depicted in the Fig. 1 to 3, the sub-patterns 6, 7 comprise calibration elements 8 that are shaped as stripes or lines. Each calibration pattern 3-5 comprises for the sake of simplicity only three calibration elements 8 (lines) of a defined width, which are spaced apart from each other via gaps 9. In this exemplary embodiment, the size of the gaps 9 matches the width of the calibration elements 8. Therefore, the first sub-pattern 6 and the second sub-pattern 7 complement each other, wherein the size of the gap 9 of one sub-pattern 6, 7 matches the width of the calibration elements 8 of the other sub-pattern 6, 7. Although, the individual sub-patterns 6, 7 are generated shifted to each other, it is also possible to align the sub-patterns 6, 7 in that both sub-patterns are generated in the same y-coordinate as depicted via the coordinate system 10. In general, the sub-patterns 6, 7 may be identical, but differently positioned on the calibration specimen 1 or may differ by the position of the calibration elements 8 in the sub-patterns 6, 7.

As can further be derived from Fig. 1, the calibration pattern 3 can be deemed as reference calibration pattern, as the sub-patterns 6, 7 are arranged relative to each other the without a displacement. Thus, a defined distance 11 between the two sub-patterns 6, 7, in particular between two calibration elements 8 of the two sub-patterns 6, 7 is 0. Hence, in a determination region 12 the area is essentially completely irradiated, as the individual calibration elements 8 of the sub-pattern 6, 7 complement each other to a fully irradiated region. In other words, the calibration elements 8 of one sub-pattern 6, 7 fill the gaps 9 of the other sub-pattern 6, 7.

The other calibration patterns 4, 5 comprise sub-patterns 6, 7 that are displaced via a defined distance 11, wherein for the sake of simplicity, the sub-patterns of the calibration pattern 4 are displaced via a half width of the calibration elements 8 and the sub-patterns 6, 7 of the calibration patterns 5 are displaced via a full width of the calibration elements 8. Of course, any other arbitrary displacement can also be used to displace the sub-patterns 6, 7 relative to each other, as depicted via dots between the individual calibration patterns 3, 4 and 5. In particular, it is possible to generate further calibration patterns between the calibration patterns 3-5 with displacement steps of 0.1 width of the calibration elements 8, for instance. Further, negative displacements, e.g. -0.1 a.u. or any other arbitrary value can also be introduced and corresponding calibration patterns can be irradiated in the calibration specimen 1.

Further, information 13 is irradiated in the calibration specimen 1 indicating the displacement of the sub-patterns 6, 7 of the individual calibration patterns 3, 4, 5. In this exemplary embodiment, the information 13 says "0" for the calibration pattern 3, as the calibration pattern 3 should be generated without a displacement between the sub-patterns 6, 7. The information 13 says "0.5" for the calibration pattern 4, as the defined distance 11 between two calibration elements 8 of the individual sub-patterns 6, 7 equals half the width of the calibration elements 8. Accordingly, the information 13 indicates "1" for the calibration pattern 7 as the sub-patterns 6, 7 are displaced via a full width of a calibration element 8, as described before.

As further described before, the calibration patterns 3, 4, 5, as depicted in Fig. 1 may be regarded as "ideal" calibration patterns that a properly calibrated irradiation device would irradiate via the individual irradiation units into the calibration specimen 1. As described before, a first irradiation unit is used to irradiate the first sub-pattern 6 and a second irradiation unit is used to irradiate the second sub-pattern 7 for each of the calibration patterns 3, 4, 5. If a displacement or any other spatial error is present and the two irradiation units of the irradiation device are not properly calibrated, the sub-patterns 6, 7 will be displaced compared to the ideal case that is depicted in Fig. 1.

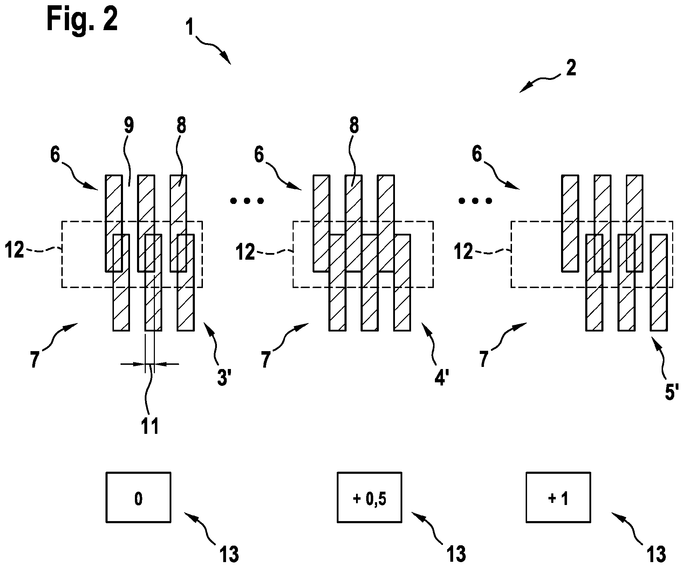

In Fig. 2 a displacement between the two irradiation units is present, wherein the calibration pattern 3', 4' and 5' are depicted. Due to the displacement between two irradiation units, the sub-patterns 6, 7 in the calibration pattern 3' are not irradiated in the proper positions, but a displacement between the sub-patterns 6, 7 occurs. Hence, the sub-patterns 6, 7 in the calibration pattern 3' are displaced via the defined distance 11, e.g. via half the width of a calibration element 8.

Further, due to the displacement between the two irradiation units, the calibration pattern 4' shows sub-patterns 6, 7 that are perfectly aligned and the calibration pattern 5' shows sub-patterns 6, 7 that are again displaced by width of the calibration element 8, but in the wrong direction.

An operator or service personnel that visually inspects the determination regions 12 will identify that due to the spatial arrangement of the sub-patterns 6, 7 the calibration pattern 4' appears the darkest, as the largest area of the determination unit 12 is irradiated via the sub-patterns 6, 7 being arranged without a displacement. Of course, the change of reflectivity and/or contrast and therefore, brightness or darkness strongly depends on the material of the calibration specimen 1, the light source under which the calibration specimen 1 is analyzed and the like.

Thus, the operator may identify that the calibration pattern 4' is the reference calibration pattern and therefore, that a displacement of half the width of the calibration element 8 is present between the two irradiation units. Therefore, a calibration of the irradiation device is necessary, wherein it is possible to directly derive from the information 13 that, according to that the calibration pattern 4' as the reference calibration pattern, a displacement by 0.5 a.u. is present. Therefore, the irradiation units have to be adjusted accordingly to ensure that no displacement between the two irradiation units is present and that no stitching errors occur.

Of course any other arbitrary shape of the calibration elements 8, arrangement of the sub-pattern 6, 7 and information 13 can be displayed or used in performing the inventive method.

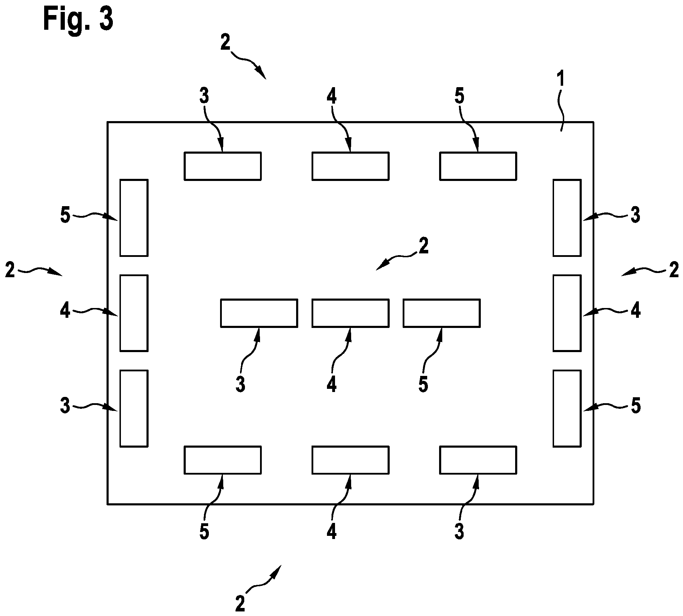

Fig. 3 shows a calibration specimen 1 in top view, wherein five identical pattern series 2 are generated in different regions of the calibration specimen 1. In this exemplary embodiment, four pattern series 2 are generated at the edges of the calibration specimen 1 and one pattern series 2 is generated in the center of the calibration specimen 1. By arranging the identical pattern series 2 in different regions and under different orientations on the calibration specimen 1, it is possible to derive different errors of the irradiation device. In each of the pattern series 2, it is possible to derive the reference calibration pattern, wherein dependent on the determined reference calibration pattern, it is possible to derive various errors or misalignments of the irradiation units.

For example, if an all four pattern series 2 the calibration pattern 5 is determined as reference calibration pattern, a rotational error in clockwise direction can be identified. It is also possible to identify distortions and the like dependent on the displacements that can be determined via the arrangement and orientation of the different pattern series 2. Of course, any other arbitrary additional arrangement of further pattern series 2, for example identical pattern series 2 in opposite orientation, is also possible.

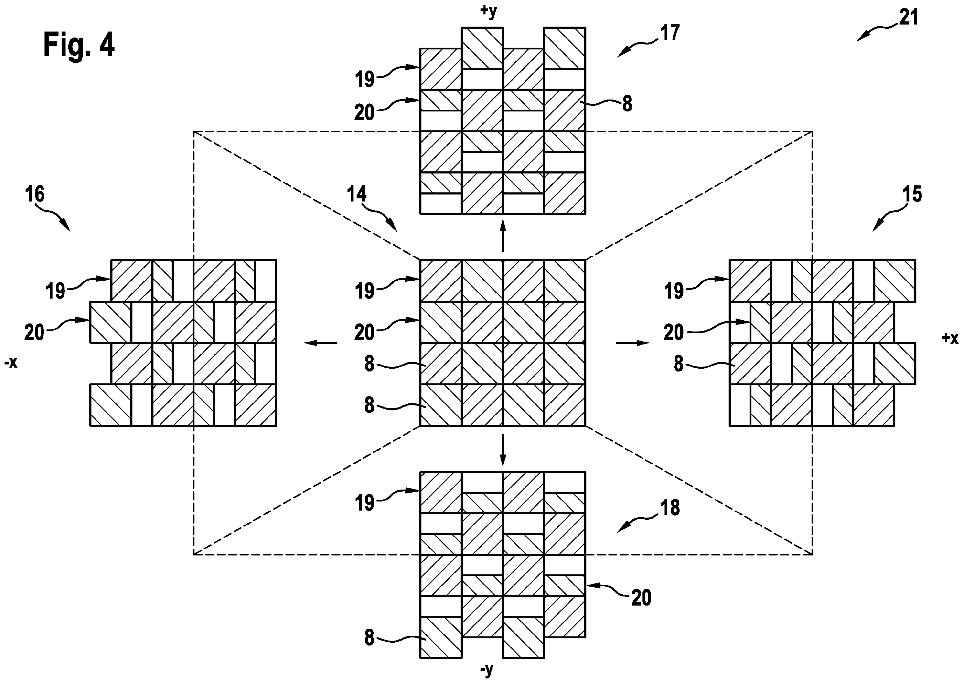

Fig. 4 shows another embodiment of a calibration specimen 1 in top view, wherein a plurality of calibration patterns 14, 15, 16, 17 and 18 are arranged or generated on the calibration specimen, respectively. As can be derived from Fig. 4, the calibration patterns 14-18 are two-dimensional calibration patterns, wherein each sub-pattern 19, 20 comprises checkerboard shape with multiple calibration elements 8. In other words, each of the calibration elements 8 that is irradiated via one of the irradiation units corresponds to a black (or white) portion of the checkerboard. The calibration pattern 14 can be deemed as reference calibration pattern in which the individual sub-patterns are not displaced (if irradiated with a properly calibrated irradiation device). Thus, a two-dimensional pattern series 21 can be generated by arranging multiple calibration patterns 14-18 two-dimensionally distributed across the calibration specimen 1. Of course, an arbitrary number with different displacements between the sub-patterns 19, 20 can be provided, as depicted via dotted lines. For the sake of simplicity only four calibration patterns 14-18 are depicted in Fig. 4.

For example, the calibration pattern 15 shows a displacement of the second sub-pattern 20 relative to the first sub-pattern 19, e.g. via half the width of a calibration element 8 in +x-direction. Accordingly, the calibration pattern 16 shows a displacement in the opposite direction, e.g. via half the width of the calibration element 8 in -x-direction. The calibration patterns of 17, 18 show displacements of the second sub-pattern 20 relative to the first sub-pattern 19 in y-direction, for example the calibration pattern 17 in +y-direction for half the width of a calibration element 8 and in the calibration pattern 18 in -y-direction also for half the width of a calibration element 8. By generating the calibration patterns 14-18 it is possible for an operator or service personnel to visually identify the calibration pattern 14-18 that appears brightest or darkest, for instance. Thus, it is possible to identify which displacement in x-direction and y-direction the irradiation units irradiate build material relative to each other. For example, if the calibration pattern 15 is identified as a reference calibration pattern, it can be derived that the irradiation units show a displacement in +x-direction.

Self-evidently, all details, features and advantages described with respect to the individual embodiments and Fig., can arbitrarily be combined and can be exchanged and transferred.

## Claims

1. Method for calibrating an irradiation device of an apparatus for additively manufacturing three-dimensional objects by means of successive layerwise selective irradiation and consolidation of layers of a build material which can be consolidated by means of at least two energy beams, wherein the at least two energy beams are guided via at least two irradiation units, **characterized by** generating at least two calibration patterns (3 - 5, 14 - 18), particularly a pattern series (2, 21), in a calibration specimen (1) comprising an at least partially overlapping, particularly complementary, first sub-pattern (6, 7, 19, 20) and second sub-pattern (6, 7, 19, 20), wherein the first sub-pattern (6, 7, 19, 20) is generated via the first irradiation unit and the second sub-pattern (6, 7, 19, 20) is generated via the second irradiation unit and determining calibration information relating to a calibration status of the two irradiation units based on the at least two calibration patterns (3 - 5, 14 - 18).

2. Method according to claim 1, **characterized by** determining a reference calibration pattern (3 - 5, 14 - 18) based on a reflectivity and/or a contrast between the calibration pattern (3 - 5, 14 - 18) and a surrounding region by comparing at least two different calibration patterns (3 - 5, 14 - 18), particularly via visual inspection.

3. Method according to claim 1 or 2, **characterized in that** in at least one reference calibration pattern (3 - 5, 14 - 18) the sub-patterns (6, 7, 19, 20) are generated in a defined relative position without a displacement and that in at least one other calibration pattern (3 - 5, 14 - 18) the sub-patterns (6, 7, 19, 20) are displaced for a defined relative distance.

4. Method according to claim 3, **characterized by** generating multiple calibration patterns (3 - 5, 14 - 18) with increasing and/or decreasing displacement, particularly relative to the reference calibration pattern (3 - 5, 14 - 18).

5. Method according to one of the preceding claims, **characterized in that** each calibration pattern (3 - 5, 14 - 18) comprises complementary sub-patterns (6, 7, 19, 20) that complement each other, particularly to a completely irradiated reference calibration pattern (3 - 5, 14 - 18).

6. Method according to one of the preceding claims, **characterized in that** each sub-pattern (6, 7, 19, 20) comprises multiple calibration elements (8) arranged in a defined, particularly symmetric and self-repeating geometry.

7. Method according to claim 6, **characterized in that** the calibration elements (8) are lines or dotted patterns or rectangles, particularly squares.

8. Method according to claim 6 or 7, **characterized in that** the sub-patterns (6, 7, 19, 20) comprise at least two calibration elements (8), wherein the gap (9) between two calibration elements (8) of one sub-pattern (6, 7, 19, 20) matches the width of the calibration elements (8) of the other sub-pattern (6, 7, 19, 20).

9. Method according to one of the preceding claims, **characterized by** generating at least two identical pattern series (2, 21) in at least two different regions of the calibration specimen (1), particularly one pattern series (2, 21) in each edge region and/or in the center of the calibration specimen (1) and determining the reference calibration pattern (3 - 5, 14 - 18) in each pattern series (2, 21).

10. Method according to claim 9, **characterized by** determining a rotational error and/or a distortion based on the determined reference calibration patterns (3 - 5, 14 - 18) of the at least two identical pattern series (2, 21).

11. Method according to one of the preceding claims, **characterized by** generating at least two different pattern series (2, 21) in the same region or in two adjacent regions, wherein the two different pattern series (2, 21) comprise calibration elements (8) differing in at least one parameter, particularly the gap size and the width of the calibration elements (8).

12. Method according to one of the preceding claims, **characterized by** generating at least one calibration pattern (3 - 5, 14 - 18) with two-dimensional sub-patterns (6, 7, 19, 20), particularly checkered sub-patterns (6, 7, 19, 20).

13. Method according to claim 12, **characterized by** generating a two-dimensional pattern series (2, 21), wherein each calibration pattern (3 - 5, 14 - 18) comprises two-dimensional sub-patterns (6, 7, 19, 20), wherein a displacement in a first direction of sub-patterns (6, 7, 19, 20) increases and/or decreases between two calibration patterns (3 - 5, 14 - 18) arranged adjacently in a first direction, particularly an x-direction, and a displacement in a second direction of sub-patterns (6, 7, 19, 20) increases and/or decreases between two calibration patterns (3 - 5, 14 - 18) arranged adjacently in a second direction, particularly a y-direction.

14. Method according to one of the preceding claims, **characterized by** generating, particularly visually recognizable, information (13) on the calibration specimen (1), particularly adjacent to at least one calibration pattern (3 - 5, 14 - 18), relating to at least one parameter of the calibration pattern (3 - 5, 14 - 18), in particular a displacement of the sub-patterns (6, 7, 19, 20) and/or a parameter of the calibration elements (8), in particular a width of the calibration elements (8), and/or at least one suggestion for a control of at least one parameter of the apparatus.

15. Method according to one of the preceding claims, **characterized in that** the calibration information is or comprises
- a position information and/or
- a relative position between the first and the second sub-pattern (6, 7, 19, 20) of the same calibration pattern (3 - 5, 14 - 18) and/or
- an orientation information and/or
- a relative position between at least two sub-patterns (6, 7, 19, 20) and/or
- a reflectivity of the calibration pattern (3 - 5, 14 - 18), particularly a grey value, in particular a brightness or darkness and/or
- a contrast between the calibration pattern (3 - 5, 14 - 18) and a surrounding region.

16. Apparatus for additively manufacturing three-dimensional objects by means of successive layerwise selective irradiation and consolidation of layers of a build material which can be consolidated by means of at least two energy beams guided via two irradiation units, **characterized in that** the apparatus is adapted to perform the method according to one of the preceding claims.
